# EUROPEAN PATENT APPLICATION

(11) **EP 0 535 706 A1**
(43) Date of publication of application: **07.04.1993**
(21) Application number: 92116925.6
(22) Date of filing: 02.10.1992
(51) Int. Cl.: H02K 1/28

(54) **Lamination and lamination securing method**

(30) Priority: 02.10.1991 US 771065
(71) Applicant: KOHLER CO., Kohler Wisconsin 53044 (US)
(72) Inventor: Bliemeister, Allan J., Fond du Lac, Wisconsin 54935 (US)
(74) Representative: Baillie, Iain Cameron

(57) **Abstract**

A lamination for securing to a shaft of a rotor for a generator or a motor wherein in one embodiment (fig. 2) a metallic plate-like lamination (10) has a passage (20) therethrough to receive a shaft of a rotor, and the lamination (10) has knurlings (23) surrounding the passage (20) for engagement with the shaft. In another embodiment (fig. 4), the lamination (30) has at least one opening (36) through the lamination (30) and adjacent the passage (34) with the opening (36) constructed and arranged to provide a biasing of the lamination (30) on the shaft in the area of the passage (34).

## Description

### Background Of The Invention

The field of the invention is laminations for use in a rotor for a generator or a motor, and particularly, laminations which have knurlings or openings adjacent a passage for fastening the laminations to the rotor shaft.

It is customary in fastening laminations to a rotor shaft to provide knurlings on the rotor shaft so as to provide an interference fit. This is shown in U. S. patent 3,164,736. It is also known to deform laminations so as to secure them to a rotor shaft. This is taught in U. S. patent 3,650,022. In U. S. patent 1,305,604 laminations are locked together by means of tongues, and in U. S. patent 4,934,042 there are spring pin members which are driven into keyways in a rotor shaft and aligned notches in a stack of laminations.

There is a cost problem in machining knurlings on a rotor shaft for lamination attachment as well as maintaining consistency in production. Prior methods for attaching laminations are not cost effective as they require using additional components or processing steps. Accordingly, there is a need to provide a more efficient method for securing laminations to a rotor shaft as well as laminations which can be more efficiently secured.

### Summary Of The Invention

The present invention relates to a lamination for use in a rotor for a generator or a motor. In one embodiment, there is a metallic plate-like lamination having a passage therethrough to receive a shaft of a rotor and the lamination has knurlings surrounding the passage and engaging the shaft.

In another embodiment, there is a metallic plate-like lamination having a passage therethrough to receive a shaft of a rotor with the lamination having at least one opening through the lamination and adjacent the passage, the opening and the passage are constructed and arranged to provide a biasing of the lamination in the area of the passage on the shaft.

In yet another embodiment, there is a rotor for use in a generator or a motor which has a plurality of stacked and aligned laminations. A rotor shaft has a smooth surface, and there are a plurality of stacked and aligned laminations with each of the laminations having a passage to receive the rotor shaft. There are knurlings surrounding the passage or openings through the laminations adjacent the passage in the laminations to provide attachment of the laminations to the shaft.

In still another embodiment, there is a method of fastening a lamination to a shaft of a rotor for a generator or motor. In one embodiment, knurlings are formed around a passage through a metallic lamination. A metallic shaft is provided, and the lamination is forced onto the shaft by orientating the passage of the lamination with the shaft and engaging the knurlings over the surface of the shaft to provide indentations in the shaft to thereby frictionally hold the lamination on the shaft.

A general object of the invention is to provide the securing of a lamination to a shaft of a rotor for use in a generator or a motor.

An object of the invention is to provide knurlings on the wall of the passage in the lamination for securing to a smooth rotor shaft.

Yet another object is to provide openings adjacent the passage in the lamination so as to effect a connection with the rotor shaft.

Still another object is to facilitate the production of laminations wherein the knurlings and the openings can be produced in an efficient manner such as by a stamping operation.

A more specific object of the invention is to eliminate the use of a knurled rotor shaft with respect to lamination attachment.

The foregoing and other objects and advantages of the invention will appear from the following description. In the description reference is made to the accompanying drawing which forms a part hereof, and in which there is shown by way of illustration a preferred embodiment of the invention. Such embodiment does not necessarily represent the full scope of the invention, however, and reference is therefore made to the claims herein for interpreting the scope of the invention.

### Brief Description of the Drawing

Fig. 1 is a sectional view through a rotor core showing the laminations attached in a manner according to this invention;
Fig. 2 is a view in side elevation showing a lamination produced in accordance with this invention;
Fig. 3 is a partial enlarged view of the lamination shown in Fig. 2 illustrating the knurlings on the lamination;
Fig. 4 is a view similar to Fig. 2 showing an alternative embodiment;
Fig. 5 is a view in side elevation and partially in cross section showing a punch engaging a lamination on a dye for forming the knurlings indicated in Fig. 3
Fig. 6 is a view similar to Fig. 5 illustrating the fastening of the laminations on a rotor shaft.

### Description of the Preferred Embodiments

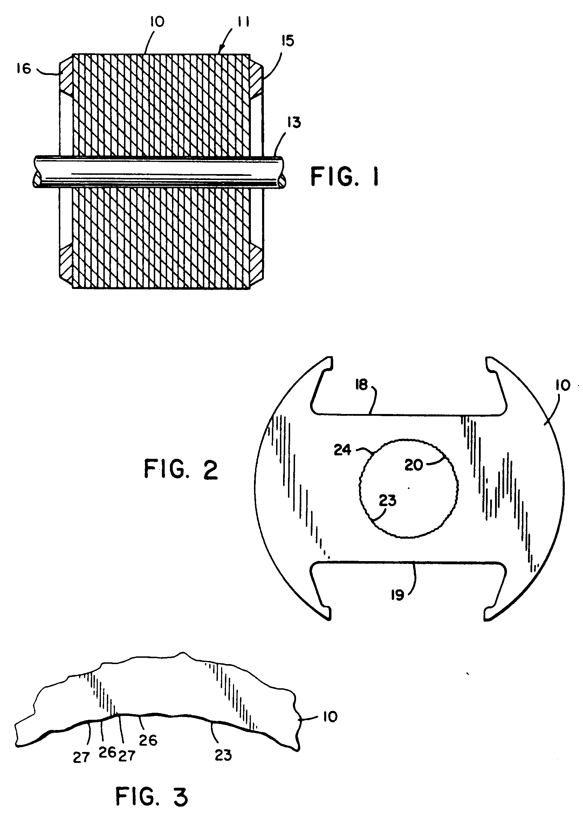

Referring specifically to Fig. 1, the laminations 10 are shown assembled on a rotor shaft 13 and provide a core generally 11. In the usual manner there are end rings 15 and 16 at the opposite ends of the core. These provide the common conductor ring for the conductor bars (not shown) which normally extend through the core between the opposite ends.

Referring specifically to Figs. 2 and 3, it is seen that the lamination 10 has slots 18 and 19 for commonly used core windings. Centrally positioned through the core is a passage 20 which in this instance has the knurlings 23 formed over the circumferential wall 24 of the passage 20. As best seen in Fig. 3, the knurlings 23 are formed by a continuous series of peaks 26 and valleys 27. Preferably the offset between the peak 26 and the valley 27 is .006 inches. The diameter of the passage 20 is 1.25 inches the number of knurlings surrounding the passage 20 is 50.

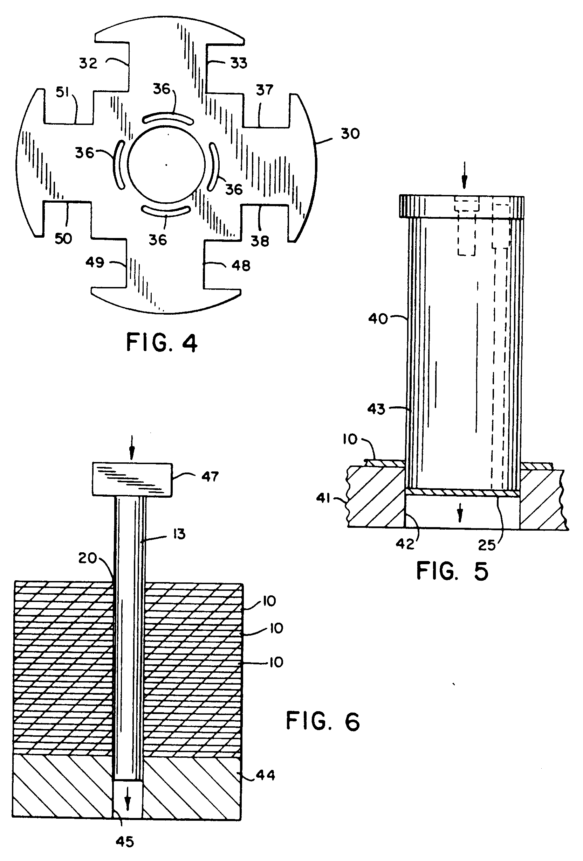

These knurlings are formed in the laminations 10 by the punch 40 as shown in Fig. 5. There it is seen that the punch 40 is pressed against the lamination 10 which is positioned over the die 41 having the die opening 42. The die 40 has the same knurling configuration on its exterior surface, as indicated by the numeral 43, to result in the knurlings 23 in the lamination as shown in Fig. 3. The usual scrap material 25 will be formed as a result.

The metallic lamination 10 is subsequently forced onto the rotor shaft 13 as indicated in Fig. 6. There it is seen that a series of laminations 10 having the knurlings 23 thereon are stacked over a support 44 with a central opening 45. The shaft 13 is forced downwardly through the passage 20 by the ram 47. The metallic shaft 13 in this instance has a smooth surface and as it contacts the knurlings 23, the knurlings bite into and frictionally engage the surface of the shaft 13 as the laminations are composed of a harder metallic material than the shaft. As a result the knurlings will form valleys in the shaft similar to 27.

Fig. 4 represents an alternative embodiment showing the lamination 30 with pairs of winding slots 32, 33; 37, 38; 48, 49 and 50, 51. It also has the central passage 34 as previously described in conjunction with passage 20 of lamination 10. In this embodiment there are no knurlings surrounding the central passage 34. Instead there are the openings 36 which are disposed radially around the passage 34 and opposite each other. These openings 36 are formed in a manner similar to the knurlings 23 using a punch 40 and die arrangement 41 such as indicated in Fig. 5. The lamination 30 is assembled on the shaft 13 in the manner indicated in conjunction with Fig. 6. It should be appreciated that the openings 36 allow for adjustment of the spring rate of the center hole fit on the shaft 13. The cutouts are sized and located to provide proper holding torque and at the same time limit the spring rate so that the lamination 30 is never too tight to be pressed on the shaft 13.

Important features of the laminations 10 and 30 are that product costs are reduced because the laminations are punched with a die and adding a knurled surface 43 or a punching surface to the die provides knurlings 23 or openings 36 on each lamination at no extra cost as the center hole of the lamination is always punched in the lamination forming process. There is no need for a secondary machining performing of shaft knurls which saves considerable costs. Further, the outside diameter of the shaft 13 becomes a simple straight turned diameter. With respect to the lamination 10 and the knurlings 23, an improved assembly core 11 is provided because the knurlings 23 on the punched laminations 10 comes out considerably more consistent than the machine knurls on the shaft. Concerning lamination 30 and the openings 36, the openings 36 are punched to a very consistent size and as the shaft is now machined with a more consistent straight outside diameter than with a knurl, the process capability is improved and assembly is easier because of smaller variations in pressing tonnage is seen as well as the probability of a too loose or too tight of fit is reduced.

The laminations 10 and 30 have been shown having a particular geometric configuration. The configuration and size of the laminations can vary and still provide the advantages of the fastening knurlings 23 or openings 36. The passages 20 and 34 are described as being of a certain diameter. This diameter can vary as to size and still utilize the advantages of the knurlings 23 or the openings 36. The number of knurlings 23 and their size as well as the number and size of the openings 36 can also vary. What is required is a frictional fitting with the knurlings 23 on the shaft 13 or a sufficient spring rate with respect to the openings 36.

In the foregoing description, the metallic lamination 10 was described as composed of a harder material than the metallic shaft 13 for forming the valleys in the shaft 13 by the knurlings 23. These valleys in the shaft 13 could also be formed by the lamination 10 when it is of equal hardness as compared to the shaft.

## Claims

1. A lamination for use in a rotor for a generator or a motor comprising;
a metallic plate-like lamination having a passage therethrough to receive a shaft of a rotor, said lamination having knurlings surrounding said passage for engagement with said shaft.

2. The lamination of claim 1 attached to a rotor shaft having a substantially smooth surface.

3. The lamination of claim 2 wherein the lamination is composed of equal or of a harder material than said shaft.

4. The lamination of claim 3 wherein there are formed valleys in said shaft by the knurlings in said laminations.

5. A lamination for use in a rotor for a generator or a motor comprising:
a metallic-like lamination having a passage therethrough to receive a shaft of a rotor, said lamination having at least one opening through said lamination and adjacent said passage, said opening constructed and arranged to provide a biasing of said lamination on said shaft in the area of said passage.

6. The lamination of claim 5 wherein there are a plurality of said openings disposed radially around said passage and opposite each other.

7. The lamination of claim 5 attached to a rotor shaft having a substantially smooth surface.

8. A method of fastening a lamination to a shaft of a rotor for a generator or motor comprising:
forming knurlings around a passage through a metallic lamination;
providing a smooth surfaced metallic shaft; and
forcing said lamination onto said shaft by orientating said passage of said lamination with said shaft and engaging said knurlings over the surface of said shaft to provide indentations in said shaft to thereby frictionally hold said lamination on said shaft.

9. The method of claim 8 wherein said lamination is composed of equal or of a metal harder than that of said shaft.

10. The method of claim 8 wherein said indentations are in the form of uniform valleys corresponding to valleys of said knurlings.

11. The method of claim 8 wherein said knurlings are formed by a die punching operation.

12. The method of claim 8 wherein said lamination is forced onto said shaft by a pressing operation.
